# FASCICULE DE BREVET EUROPEEN

(11) **EP 3 131 813 B1**
(45) Date de publication et mention de la délivrance du brevet: **11.03.2020**
(21) Numéro de dépôt: 15720287.0
(22) Date de dépôt: 17.04.2015
(51) Int. Cl.: B64C 25/00, B64D 47/08

(54) **AERONEF COMPRENANT UN BRAS ESCAMOTABLE MUNI DE DETECTEUR D'OBSTACLES**
FLUGZEUG MIT EINZIEHBAREM ARM MIT EINEM HINDERNISDETEKTOR
AIRCRAFT COMPRISING A RETRACTABLE ARM EQUIPPED WITH AN OBSTACLE DETECTOR

(30) Priorité: 17.04.2014 FR 1453516
(43) Date de publication de la demande: 22.02.2017
(73) Titulaire: Safran Electronics & Defense, 92100 Boulogne-Billancourt (FR); Safran Landing Systems, 78140 Vélizy-Villacoublay (FR)
(72) Inventeur: NECCI, Carlo, 78140 Velizy Villacoublay (FR); LACOURIE, Jacques, 92100 Boulogne-Billancourt (FR)
(74) Mandataire: Regimbeau
(86) Numéro de dépôt international: PCT/EP2015/058383
(87) Numéro de publication internationale: WO 2015/158892

(56) Documents cités:
- WO-A2-2008/119144
- FR-A1- 2 686 981
- US-A- 5 969 686
- US-A1- 2002 081 110

## Description

### DOMAINE DE L'INVENTION

L'invention concerne le domaine général de la détection d'obstacles autour d'un aéronef.

### ARRIERE-PLAN TECHNOLOGIQUE

De nos jours, la principale cause d'accidents dans un aéroport sur les voies de circulations et au niveau des portes d'embarquement ont lieu durant les opérations au sol des aéronefs. Ces accidents sont généralement dus à la collision de l'aéronef avec des obstacles présents autour de celui-ci durant ses manœuvres, en particulier lors des manœuvres arrière. En effet, les pilotes n'ont aucune visibilité dans les zones situées sous et derrière leur aéronef.

La présence de tels obstacles est dangereuse pour le personnel au sol, pour l'aéronef ainsi que pour les passagers. De plus, les accidents résultant de la collision d'un aéronef avec des obstacles ont pour conséquence de réduire l'opérabilité de l'aéroport, d'entrainer des retards sur les vols et de fortement perturber les activités des compagnies aériennes.

Afin d'éviter des collisions entre un aéronef et des obstacles présents au sol, il est connu d'accompagner l'aéronef durant toute sa phase au sol (remorquage, taxi, etc.), à l'aide d'un personnel dédié. Ce personnel, spécialement formé pour ce type de mission, guide l'aéronef au sol en anticipant la présence des obstacles. Toutefois, le guidage, l'anticipation et la capacité à identifier des obstacles potentiellement gênants sur la piste sont limités par le fait que le personnel est humain et peut par conséquent faire des erreurs, être momentanément déconcentré, ou encore avoir une visibilité réduite en raison des conditions météorologiques. Par ailleurs, un être humain ne peut physiquement pas surveiller un champ de vision 360° autour de l'avion. Enfin, le personnel qui procède à l'assistance au stationnement des aéronefs et au guidage du pilote est tenu de respecter des procédures de radiocommunication ainsi qu'une gestuelle de communication avec le personnel de piste.

Ce travail d'accompagnement est en outre dangereux, fatigant et stressant pour le personnel au sol, qui en plus des obstacles présents au sol doit anticiper le mouvement des véhicules et des autres aéronefs présents au sol.

On connait déjà, notamment par le document US2002/0081110 des aéronefs conformes au préambule de la revendication 1.

### RESUME DE L'INVENTION

Un objectif de l'invention est de proposer un nouveau moyen permettant de détecter des obstacles durant les opérations au sol des aéronefs et de répondre au besoin de perception arrière et sous l'aéronef, notamment lors des manœuvres arrière, qui soit plus efficace que les techniques conventionnelles, quelles que soient les conditions de visibilité au sol, et qui soit en outre automatique et indépendant des réflexes humains.

Pour cela, l'invention propose un aéronef comprenant :
- une structure,
- un atterrisseur, monté sur la structure de l'aéronef, et
- au moins un détecteur d'obstacle,
dans lequel le détecteur d'obstacle est fixé sur un bras, ledit bras étant monté sur la structure de manière à être mobile entre une position de repos, dans laquelle le bras est escamoté, et une position de détection, dans laquelle le bras est déployé.

L'atterrisseur est rétractable et présente une configuration rétractée, dans laquelle l'atterrisseur est logé dans une case formée dans la structure, et une configuration sortie, dans laquelle l'atterrisseur est déployé, le bras étant monté dans la case de l'atterrisseur, le détecteur d'obstacle étant situé à proximité d'une partie inférieure de l'atterrisseur, à distance de la structure de l'aéronef, lorsque le bras est déployé.

Avec une telle configuration, le détecteur est situé à proximité immédiate de l'atterrisseur. Ceci est particulièrement avantageux dans la mesure où l'atterrisseur est la partie la plus exposée à la rencontre avec des obstacles, (véhicules au sol en particulier) et où les obstacles susceptibles de heurter l'atterrisseur sont hors de vue de l'équipage.

Le fait de placer le système de détection proche de l'atterrisseur permet de voir ce qui est dans la direction de déplacement de l'atterrisseur, évite tout problème de parallaxe et permet donc de détecter les obstacles et de pouvoir les classer entre critique ou non critique de façon simple (test binaire du type « l'obstacle est-il ou non dans l'axe de déplacement de l'avion au niveau du train ? »).

Tout autre positionnement dans le fuselage ou sur les ailes (en dehors du voisinage des trains d'atterrissage) impose une évaluation plus complexe (évaluation de la position réciproque entre l'obstacle et l'atterrisseur), qui ne peut être réalisée avec un seul capteur (détermination nécessaire à la fois d'une direction et d'une distance pour l'atterrisseur et pour tout obstacle potentiel).

Certaines caractéristiques préférées mais non limitatives de l'aéronef sont les suivantes :
- le détecteur d'obstacle peut être fixé dans une zone arrière la case ;
- l'atterrisseur comprend un caisson, présentant une direction principale s'étendant selon un axe longitudinal, ledit caisson comprenant une première extrémité configurée pour être montée sur l'aéronef et une deuxième extrémité opposée à la première extrémité, et une tige, montée à coulissement sur la deuxième extrémité du caisson, ladite tige étant mobile en translation par rapport au caisson le long de l'axe longitudinal, et, dans la position de repos, le détecteur d'obstacle s'étend dans une zone adjacente à la deuxième extrémité du caisson,
- le bras comprend une première extrémité, montée sur la structure, et une deuxième extrémité, opposée à la première extrémité, le détecteur d'obstacle étant fixé dans une zone adjacente de la deuxième extrémité du bras,
- le détecteur d'obstacle est fixé de manière à être orienté vers une zone arrière de l'atterrisseur,
- le bras passe de la position de repos à la position de détection uniquement lorsque l'atterrisseur est en configuration sortie,
- le bras passe en position de repos lorsqu'une vitesse de déplacement de l'aéronef est inférieure à une vitesse seuil prédéterminée,
- le bras est télescopique,
- l'aéronef comprend au moins deux détecteurs d'obstacle,
- les détecteurs d'obstacle sont fixés ensemble de manière à former une pièce monobloc,
- le détecteur d'obstacle comprend au moins un, de préférence au moins deux détecteurs d'obstacle choisis parmi le groupe suivant : détecteur de proximité infrarouge, détecteur de proximité hyperfréquence, détecteur de proximité ultrasons, une ou plusieurs caméras infrarouge ou visible, un télémètre à ultrasons, un télémètre radar ou un télémètre laser,
- l'aéronef comprend en outre un actionneur configuré pour mettre en rotation le détecteur d'obstacle autour du bras,
- l'actionneur est configuré pour mettre le bras en rotation le détecteur d'obstacle autour du bras par mise en rotation du bras,
- le détecteur d'obstacle comprend un champ de détection présentant une ouverture et une profondeur configurées pour couvrir une zone inférieure de l'aéronef et une zone arrière de l'aéronef,
- l'ouverture du champ de détection présente un angle de surveillance horizontale compris entre 0° et 270°, et une profondeur comprise entre environ 0 mètres et environ 250 mètres,
- l'aéronef comprend au moins deux détecteurs d'obstacle, chaque détecteur d'obstacle étant fixé sur un bras respectif monté sur la structure de manière à être mobile entre une position de repos et une position de détection.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :

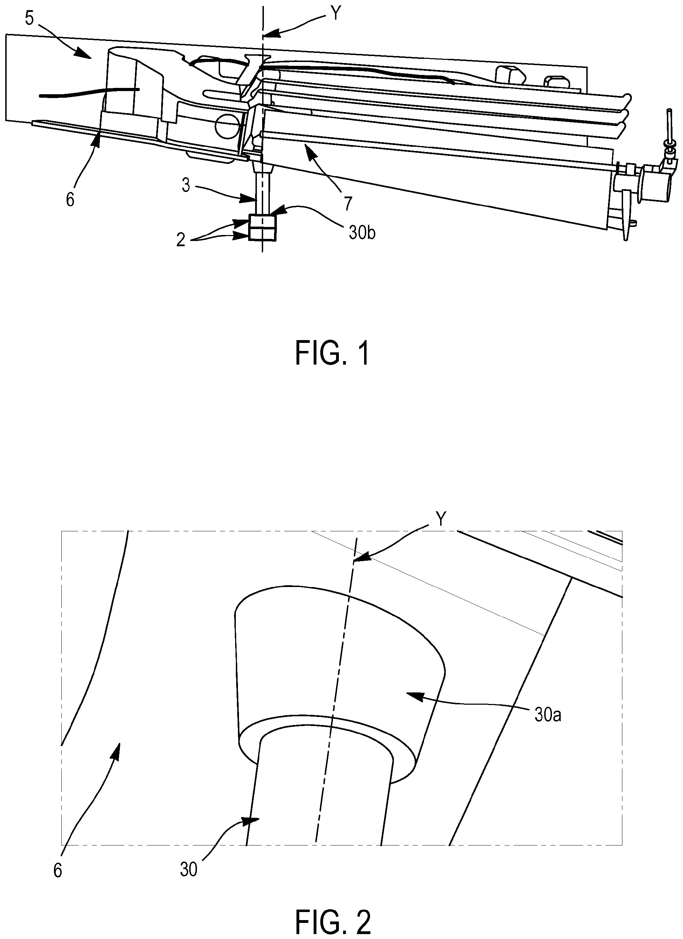

La figure 1 illustre une vue schématique d'une partie d'un exemple de réalisation d'un aéronef conforme à l'invention, dans lequel le bras est en position de détection,
La figure 2 est une vue en détail d'une partie d'un exemple de réalisation d'un bras supportant un détecteur d'obstacle pour un aéronef conforme à l'invention,

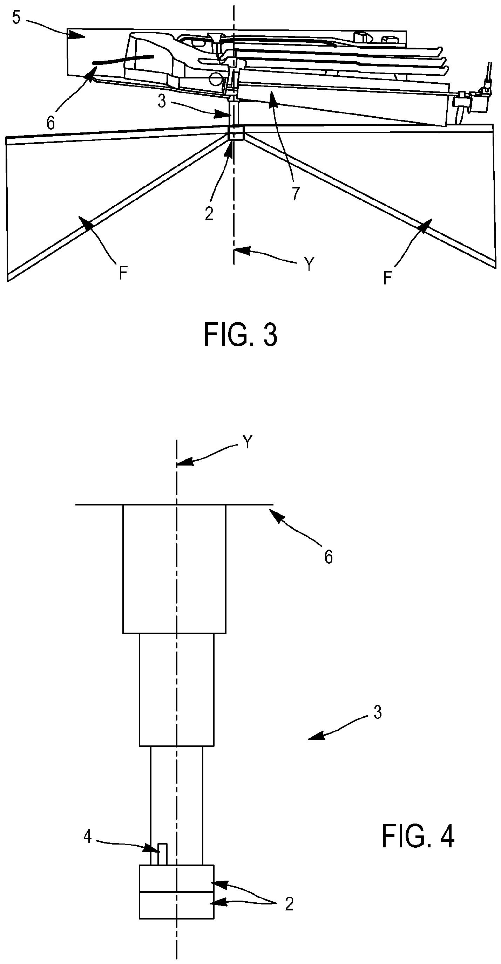

La figure 3 illustre le champ de détection du détecteur de l'aéronef de la figure 1,
La figure 4 est une vue en coupe longitudinale d'un exemple de réalisation d'un bras,

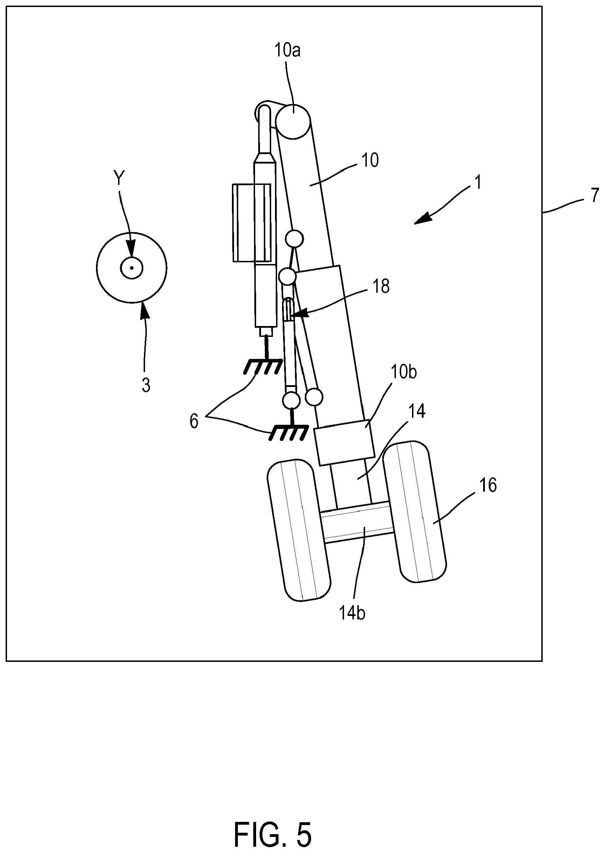

La figure 5 est une vue schématique d'un exemple de réalisation d'une case d'un aéronef conforme à l'invention, sur laquelle sont visibles un atterrisseur en configuration rétractée et un bras en position de repos,
La figure 6 illustre un exemple de positionnement de bras sur un exemple d'aéronef comprenant un atterrisseur avant et deux atterrisseurs principaux et des exemples de champs de détection associés.

### DESCRIPTION DETAILLEE D'UN MODE DE REALISATION

Afin de permettre une détection d'obstacles optimisée et de réduire les risques de collision d'un aéronef 5 durant les opérations au sol, l'invention propose de munir l'aéronef 5 d'un ou plusieurs détecteurs d'obstacle 2 au niveau de son train d'atterrissage 1 (ou atterrisseur). Les obstacles ainsi détectés par le(s) détecteur(s) peuvent alors être utilisés comme valeurs d'entrée pour des unités de traitement dédiées (ou le cas échant au pilote de l'aéronef directement), configurées pour analyser ces valeurs d'entrée et en déduire une trajectoire sure et optimisée lors du déplacement au sol de l'aéronef. Par exemple, les unités de traitement peuvent notamment réaliser une carte des obstacles présents autour de l'aéronef afin d'aider le pilote de l'aéronef à diriger l'aéronef. Le cas échéant, les unités de traitement sont également configurées pour traiter les informations obtenues par les détecteurs d'obstacle et les optimiser (par exemple lorsque le détecteur 2 comprend une caméra vidéo, les images obtenues devant être traitées afin de tenir compte des différences de luminosité entre les zones à l'ombre et les zones exposées à la lumière).

L'atterrisseur 1 peut aussi bien comprendre un atterrisseur principal (par exemple situé sous les ailes) ou encore d'un atterrisseur auxiliaire (tel qu'un atterrisseur avant, situé au niveau du nez de l'aéronef 5). Dans l'exemple illustré sur les figures, il s'agit d'un atterrisseur principal.

Un atterrisseur 1 peut être fixe ou rétractable dans une case 7 à atterrisseur 1 dédiée formée dans la structure 6 (fuselage ou ailes) de l'aéronef 5.

Dans ce qui suit, l'invention sera décrite plus particulièrement dans le cas d'un atterrisseur 1 rétractable, c'est-à-dire un atterrisseur 1 configuré pour être rétracté entre la phase de décollage et la phase d'atterrissage dans une case 7 d'atterrisseur 1 d'un aéronef 5, et sorti lors des phases d'atterrissage et des opérations au sol.

L'atterrisseur 1 comprend généralement, de manière connue en soi, un caisson 10, présentant une direction principale s'étendant selon un axe longitudinal X, qui constitue le corps principal de l'atterrisseur 1 et permet d'assurer la transmission des efforts principaux vers la structure 6 de l'aéronef 5. Le caisson 10 comprend à cet effet une première extrémité 10a, montée sur la structure 6 de l'aéronef 5, et une deuxième extrémité 10b, comportant une cavité non apparente dans laquelle est montée pivotante une partie basse constituée d'une embase 12 et d'une tige coulissante 14.

La tige coulissante 14 est mobile en translation par rapport au caisson 10 le long de l'axe longitudinal X et forme avec l'embase 12 un amortisseur adapté pour absorber l'énergie de l'impact de l'atterrissage et supporter les évolutions au sol de l'aéronef 5. L'embase 12 peut être montée dans la cavité de la deuxième extrémité 10b du caisson 10 de telle sorte que la tige coulissante 14 puisse pivoter sensiblement autour de l'axe longitudinal X du caisson 10.

L'extrémité 14b de la tige coulissante 14, qui est la plus éloignée de la deuxième extrémité 10b du caisson 10, supporte des moyens de déplacement 16, comme par exemple une roue constituée d'une jante

L'atterrisseur 1 comporte en outre une contrefiche 18, comprenant une première extrémité configurée pour être montée sur l'aéronef 5 et une deuxième extrémité configurée pour être connectée au caisson 10, à proximité de la deuxième extrémité 10b dudit caisson 10. La contrefiche 18 est configurée pour transmettre à la structure 6 de l'aéronef 5 les efforts axiaux venant des moyens de déplacement 16.

La Demanderesse s'est aperçue qu'il était techniquement difficile de loger des capteurs tels que détecteurs d'obstacle 2 sur l'atterrisseur 1, dans la mesure où le champ de détection F de ces détecteurs d'obstacle 2 doit couvrir au moins la zone s'étendant sous l'aéronef 5 et la zone s'étendant à l'arrière de l'aéronef 5 (en direction de l'empennage et au-delà). De manière optionnelle, il peut également être intéressant que les détecteurs d'obstacle 2 soient capables de couvrir la zone avant (vers le nez) de l'aéronef 5.

Par ailleurs, les performances des détecteurs d'obstacle 2 ne doivent pas être altérées en raison de la percussion d'un objet lorsque l'aéronef roule à grande vitesse sur la piste, ni en raison des conditions météorologiques (flocons de neige, gouttes de pluie, grêle, etc.) ou de particules présentes dans l'environnement (poussières, fumées, pollution, etc.).

On notera en outre que la position, l'orientation et le choix des détecteurs d'obstacle 2 doit tenir compte de l'étendue de la zone que l'on souhaite surveiller, du champ de détection intrinsèque au détecteur d'obstacle choisi (ouverture et profondeur du champ), ainsi que de la sensibilité de chaque détecteur (à la luminosité notamment, qui est généralement plus sombre sous l'aéronef qu'autour de celui-ci, ce qui peut poser problème pour certains types de détecteurs).

Ces difficultés sont encore accrues en raison du caractère rétractable de l'atterrisseur 1. En effet, en configuration sortie de l'atterrisseur 1, les détecteurs d'obstacle 2 doivent être dirigés dans la direction de détection des obstacles. Par ailleurs, en configuration rétractée, les détecteurs d'obstacle 2 doivent pouvoir être logés dans la structure 6 de l'aéronef 5, dont le volume disponible est fortement limité.

Afin de répondre à l'ensemble des exigences citées ci-dessus, le détecteur d'obstacle 2 est fixé sur un bras 3, monté sur la structure 6 de l'aéronef, qui est mobile entre une position de repos, dans laquelle il est escamoté, et une position de détection, dans laquelle il est déployé de manière à positionner le détecteur d'obstacle 2 dans partie inférieure de l'atterrisseur 1, à distance de la structure 6 de l'aéronef 5 et du sol. Dans la position de détection, le détecteur d'obstacle 2 s'étend alors dans une zone adjacente à la deuxième extrémité 10b du caisson 10, ce qui permet d'obtenir un large champ de détection F. En effet, en positionnant ainsi le détecteur d'obstacle 2, le champ de détection F du détecteur 2 n'est pas gêné par la structure 6 de l'aéronef 5 (fuselage ou aile, selon la position du détecteur 2) de l'aéronef 5. Par ailleurs, le détecteur d'obstacle 2 étant à distance du sol, son champ de détection F n'est pas limité par la présence du sol et les risques qu'il entre en collision avec des objets présents sur le sol ou projeté lors du déplacement de l'aéronef 5 sont fortement réduits.

Le détecteur d'obstacle 2 peut être allumé afin de détecter la présence d'obstacles éventuels autour de l'aéronef 5 lorsque le bras 3 est en position de détection, et éteint lorsque le bras 3 est en position de repos.

Le bras 3 présente un corps principal 30, s'étendant selon une direction principale définissant un axe longitudinal Y du bras 3 et comprenant une première extrémité 30a, configurée pour être montée sur la structure 6 de l'aéronef, et une deuxième extrémité 30b, opposée à la première extrémité 30a.

Dans la position de détection, le corps du bras 3 peut s'étendre sensiblement verticalement, c'est-à-dire en direction du sol et sensiblement parallèlement à l'axe longitudinal X du caisson 10. Le détecteur d'obstacle 2 peut alors être fixé au niveau de la deuxième extrémité 30b du bras 3, de manière à s'étendre sous le corps 30 du bras 3 lorsque celui-ci est dans sa position de détection.

Le bras 3 peut être télescopique, de sorte que la distance entre la première 30a et la deuxième extrémité 30b du corps 30 du bras 3 est variable. Dans cette forme de réalisation, la position de repos du bras télescopique 3 correspond alors à une position rétractée, tandis que sa position de détection correspond à une position déployée. La distance entre la première 30a et la deuxième 30b extrémité est donc plus courte dans la position de repos que dans la position escamotée du bras télescopique 3.

En variante, le bras 3 peut être pivotant et être monté à rotation au niveau de sa première extrémité 30a sur la structure 6 de l'aéronef 5 à l'aide d'une fixation du type pivot. Dans cette variante de réalisation, la distance entre la première 30a et la deuxième 30b extrémité du bras 3 est donc fixe. Par ailleurs, dans la position de repos du bras pivotant 3, le bras 3 peut être en position sensiblement horizontale, puis venir en position sensiblement verticale en position de détection par rotation autour de la liaison pivot.

Selon une autre variante encore, le bras 3 peut être à la fois télescopique et pivotant.

Le bras 3 peut être monté sur l'aéronef 5, dans la case 7 de l'atterrisseur 1.

Le bras 3 peut alors être escamoté dans la case 7 de l'atterrisseur 1 lorsqu'il est en position de repos et se déployer lorsque l'atterrisseur 1 est dans configuration sortie afin de venir en position de détection.

La case 7 de l'atterrisseur 1 permet alors de protéger le bras 3 et le détecteur d'obstacle 2, en particulier au cours des phases de vol. Cette configuration permet en outre de ne pas impacter l'aérodynamisme de l'aéronef 5 lorsque le bras est en position de repos.

La position du bras 3 dans la case 7 peut notamment être choisie en fonction de la précision de détection et du champ de détection F du détecteur d'obstacle 2 ainsi que de la géométrie de l'atterrisseur 1 et de sa case 7 d'atterrissage (place disponible dans la case 7, cinématique de sortie et de rétractation, etc.). Il peut notamment être avantageux de déporter le bras 3 vers l'arrière de la case 7 (c'est-à-dire la plus proche de l'empennage de l'aéronef 5) afin d'optimiser le champ de détection F du détecteur 2, notamment lorsque l'on cherche à visualiser à l'aide du détecteur les zones sous-jacente et arrière de l'aéronef 5, et de réduire les zones masquées (en particulier par la présence de l'atterrisseur 1). Par ailleurs, la position du bras 3 dans la case 7 est choisie de sorte que le bras n'interfère pas lors de la sortie ou de la rétractation de l'atterrisseur 1 dans la case 7. Ainsi, la première extrémité du bras 3 peut par exemple être positionnée dans la zone s'étendant entre la roue et la contrefiche de l'atterrisseur 1 lorsque l'atterrisseur est rétracté dans la case 7.

La position du détecteur d'obstacle 2 sur le bras 3 peut également être déterminée en fonction de la précision de détection et du champ de détection F du détecteur d'obstacle 2, ainsi que de la géométrie de l'atterrisseur 1 et de la position du bras 3 dans la case 7 d'atterrissage.

Dans une forme de réalisation, le bras 3 ne passe de sa position de repos à sa position de détection que lorsque l'atterrisseur 1 est dans sa configuration sortie. Le bras 3 reste donc escamoté en position de repos et protège le détecteur d'obstacle 2 tant que l'atterrisseur 1 est en configuration rétractée.

De manière optionnelle, le bras 3 peut être commandé par la vitesse de déplacement de l'aéronef 5, afin d'éviter que le détecteur d'obstacle 2 ne soit percuté par un objet, par exemple une pièce présente sur la piste d'atterrissage, ou que les conditions météorologique (pluie, neige, etc.) ne gênent la détection des obstacles par le détecteur 2. Dans cette variante de réalisation, le bras 3 ne peut alors passer dans sa position de détection que lorsque les deux conditions cumulatives suivantes sont remplies :
- L'atterrisseur 1 est dans sa configuration sortie, et
- La vitesse de l'aéronef 5 est inférieure à une vitesse seuil prédéterminée.

Ces conditions cumulatives permettent ainsi de préserver le détecteur d'obstacle 2 et de ne pas déployer prématurément le bras 3.

Le cas échéant, le détecteur d'obstacle 2 peut également être protégé de son environnement (intempérie, vent, etc.) à l'aide d'un bouclier de protection, par exemple par un capot de protection ou par le support 3 du détecteur 2.

L'aéronef 5 peut en outre comprendre une unité de contrôle, adaptée pour commander le bras 3 et le détecteur d'obstacle 2. En particulier, l'unité de contrôle peut être configurée pour faire passer le bras 3 de sa position de repos à sa position de détection, lorsque la ou les conditions correspondantes (configuration sortie de l'atterrisseur et le cas échéant vitesse de l'aéronef 5 inférieure à la vitesse seuil prédéterminée) sont remplies. Par ailleurs, l'unité de contrôle peut commander l'allumage (respectivement l'extinction) du détecteur d'obstacle 2 lorsque le bras 3 est en position de détection (respectivement de repos).

L'unité de contrôle peut notamment être logée directement dans le bras 3, par exemple dans le corps 30 du bras 3. Par ailleurs, le bras 3 peut être équipé de l'ensemble des câbles de connexion et d'alimentation du ou des détecteurs. De la sorte, il suffit de fixer le bras 3 à la structure 6 de l'aéronef et de connecter les câbles des détecteurs au faisceau de câbles existant de l'aéronef 5 pour installer le bras 3 et le détecteur d'obstacle 2.

L'unité de contrôle peut en outre être configurée pour transmettre les informations collectées par le détecteur d'obstacle 2 aux unités de traitement dédiées, afin de définir une trajectoire sure et optimisée lors du déplacement au sol de l'aéronef 5.

Selon un mode de réalisation, l'atterrisseur 1 peut comprendre plusieurs détecteurs d'obstacle 2, par exemple deux détecteurs d'obstacle 2, afin d'améliorer la détection des obstacles, de réduire le bruit pouvant être causé par les conditions externes (notamment par les conditions météorologiques) et de pallier tout dysfonctionnement éventuel d'un des détecteurs d'obstacle 2. Les deux détecteurs d'obstacles 2 peuvent alors être identiques (même technologie de détection et/ou même précision de détection) ou différents.

Par exemple, l'atterrisseur 1 peut comprendre au moins un, de préférence au moins deux détecteurs d'obstacle 2 choisis parmi le groupe suivant : un détecteur de proximité (infrarouge, hyperfréquence, ultrasons, etc.), une ou plusieurs caméras (infrarouge ou visible - vision artificielle simple ou stéréovision, etc.), un télémètre (télémètre à ultrasons, radar ou télémètre laser), etc.

Dans le cas d'un détecteur d'obstacles 2 comprenant une caméra, les images transmises par la caméra peuvent en outre contribuer à la collecte d'informations pouvant aider au guidage et au pilotage de l'aéronef 5, à l'enregistrement de la position de l'aéronef 5 par rapport à des marques au sol ou à des panneaux placés sur les bords des voies de circulation, etc.

L'aéronef 5 peut en outre comprendre plusieurs bras 3, munis chacun d'au moins un détecteur d'obstacle 2. Par exemple, l'aéronef 5 peut comprendre un premier bras 3 monté à proximité d'un atterrisseur principal1 et sur lequel sont fixés un ou plusieurs détecteurs d'obstacle 2, et un deuxième bras 3 monté à proximité d'un atterrisseur auxiliaire 1 et sur lequel sont fixés un ou plusieurs détecteurs d'obstacle 2.

La mise en œuvre de plusieurs bras 3 pour fixer les détecteurs d'obstacle permet d'obtenir plusieurs points de prise de vue distincts et d'élargir ainsi le champ de détection des obstacles, d'améliorer la précision des mesures effectuées par les différents détecteurs d'obstacles et de réduire les angles morts possibles ainsi que l'impact des conditions météorologiques sur les mesures effectuées.

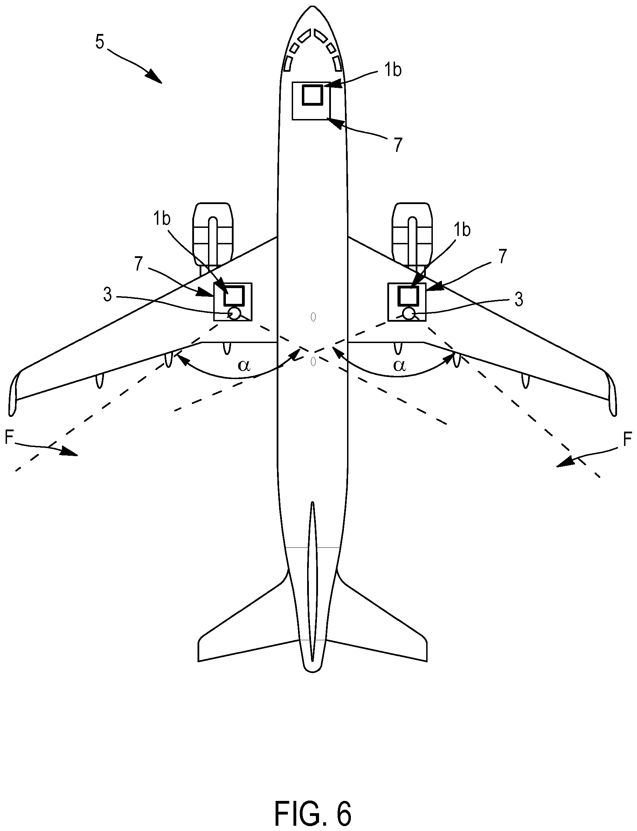

Par exemple, on a illustré sur la figure 6 un exemple de positionnement de bras 3 munis de détecteurs d'obstacle 2 sur un exemple d'aéronef 5 comprenant deux atterrisseurs principaux 1a fixés au niveau de ses ailes et un atterrisseur avant 1b fixé sous le nez de l'aéronef 5. On comprendra que l'invention n'est pas limitée à ce type d'aéronef, et peut aussi bien s'appliquer à des aéronefs 5 comprenant un nombre différent d'atterrisseurs 1. La position et l'orientation des bras 3 et des détecteurs d'obstacle 2 sont alors adaptées en fonction du type d'aéronef 5 et du nombre d'atterrisseurs.

Dans cet exemple de réalisation, les bras 3 sont fixés dans une partie arrière de la case 7 des atterrisseurs principaux 1a, leurs détecteurs 2 respectifs étant orientés vers l'arrière de l'aéronef 5. L'aéronef 5 ne comprend ici pas de détecteur d'obstacle 2 au niveau de son atterrisseur avant 1b. On comprendra bien entendu que l'aéronef pourrait en variante comprendre un bras supplémentaire fixé dans la case 7 de l'atterrisseur avant 1b. Grâce à cette position et à cette orientation, non seulement les détecteurs d'obstacle 2 peuvent être logés dans un espace libre dans la case 7 de leur atterrisseur respectif 1a tout en respectant la cinématique de l'atterrisseur 1a lors de sa sortie ou de sa rétractation, mais en outre le champ de détection F des détecteurs 2 permet de couvrir une partir importante de la zone s'étendant sous l'aéronef 5 et derrière celui-ci. Par ailleurs, cette position des détecteurs d'obstacle 2 permet d'obtenir un recouvrement important de leur champ de détection F respectif dans la zone sous-jacente à l'aéronef 5.

Le détecteur d'obstacle 2 est de préférence choisi de manière à présenter un champ de détection F optimal pour une faible dimension, afin d'obtenir de bonnes performances en matière de détection et de réduire l'encombrement du bras 3, en particulier lorsque le bras 3 est escamoté en position de repos. Il n'est alors pas nécessaire de modifier la structure 6 de l'aéronef 5 pour recevoir le bras 3 escamoté, notamment lorsque le bras 3 est logé dans la case 7 de l'atterrisseur 1.

De préférence, le détecteur d'obstacle 2 est choisi de manière à présenter un champ de détection F capable de couvrir une zone inférieure et une zone arrière de l'aéronef 5. Par exemple, l'ouverture du champ de détection peut présenter un angle α compris entre 0° et 270°, et une profondeur comprise entre environ 0 mètre et environ 250 mètres. Un tel détecteur 2 est alors capable de détecter de manière suffisamment précise des obstacles dans l'environnement d'un aéronef 5. Par ailleurs, la technologie actuelle permet de réaliser des détecteurs d'obstacle 2 présentant de telles performances avec un faible encombrement.

Dans une forme de réalisation, l'atterrisseur 1 peut comprendre un actionneur 4 configuré pour mettre le détecteur d'obstacle 2 en rotation autour de l'axe longitudinal Y du bras 3. La mise en œuvre d'un tel actionneur 4 permet ainsi au détecteur 2 d'élargir l'angle α de son champ de détection F en effectuant un balayage de la zone environnante. Le détecteur 2 peut ainsi détecter des obstacles sur 360° autour de l'axe longitudinal Y du bras 3, et ce même si le rayon α initial du champ de détection F du détecteur d'obstacle 2 est inférieur à 360°.

L'actionneur 4 permet donc de réduire les dimensions du détecteur d'obstacle 2, et donc son encombrement, en réduisant le champ de détection requis pour le détecteur 2.

Selon une première forme de réalisation, l'actionneur 4 peut être configuré pour mettre le détecteur d'obstacle 2 en rotation autour de l'axe Y du bras 3, le bras 3 restant fixe par rapport à la structure 6 de l'aéronef 5.

En variante, selon une deuxième forme de réalisation, l'actionneur 4 peut mettre le bras 3 en rotation autour de son axe longitudinal Y, le détecteur d'obstacle 2 restant fixe par rapport audit bras 3.

Lorsque l'atterrisseur 1 comprend plusieurs détecteurs d'obstacle 2, au moins deux détecteurs d'obstacle 2 peuvent être fixés ensemble de manière à former une pièce monobloc. Par exemple, tout ou partie des détecteurs d'obstacle 2 peut être fixée par l'intermédiaire d'un support commun.

En variante, les détecteurs d'obstacle 2 peuvent être fixés séparément sur le bras 3. Le cas échéant, chaque détecteur d'obstacle 2 peut être associé à un actionneur 4 correspondant. Les détecteurs d'obstacles 2 peuvent alors être mis en mouvement indépendamment les uns des autres à l'aide de leur actionneur 4 respectif.

La fixation des détecteurs d'obstacle 2 sur un bras 3 escamotable permet de garantir le bon positionnement des détecteurs d'obstacle 2, même lorsque l'atterrisseur 1 est rétractable. La position des détecteurs d'obstacle 2 est en effet indépendante de celle de l'atterrisseur 1. Par ailleurs, la présence optionnelle d'actionneurs 4 permet aux détecteurs d'obstacle 2 de balayer un large champ de détection F, et de garantir une vision complète à l'avant, à l'arrière et sur les côtés de l'aéronef 5.

De plus, l'ajout d'un bras 3 ne requiert que de moindres modifications de la structure 6 des aéronefs 5 connus. L'unité de commande et les câbles de connexion et d'alimentation du ou des détecteurs peuvent en effet être logés dans le bras 3. Il est donc aisé de remettre à niveau les aéronefs 5 existants afin de les munir de détecteurs d'obstacle 2.

## Revendications

1. Aéronef (5) comprenant :
- une structure (6),
- un atterrisseur (1), monté sur la structure (6) de l'aéronef, et
- au moins un détecteur d'obstacle (2),
dans lequel le détecteur d'obstacle (2) est fixé sur un bras (3), ledit bras (3) étant monté sur la structure (6) de manière à être mobile entre une position de repos, dans laquelle le bras (3) est escamoté, et une position de détection, dans laquelle le bras (3) est déployé,
**caractérisé en ce que** l'atterrisseur (1) est rétractable et présente une configuration rétractée, dans laquelle l'atterrisseur (1) est logé dans une case (7) formée dans la structure (6), et une configuration sortie, dans laquelle l'atterrisseur (1) est déployé, le bras (3) étant monté dans la case (7) de l'atterrisseur (1), le détecteur d'obstacle (2) étant situé à proximité d'une partie inférieure de l'atterrisseur (1), à distance de la structure (6) de l'aéronef (5), lorsque le bras est déployé.

2. Aéronef (5) selon la revendication 1, dans lequel l'atterrisseur (1) comprend:
- un caisson (10), présentant une direction principale s'étendant selon un axe longitudinal (X), ledit caisson (10) comprenant une première extrémité (10a) configurée pour être montée sur l'aéronef (5) et une deuxième extrémité (10b) opposée à la première extrémité (10a),
- une tige (14), montée à coulissement sur la deuxième extrémité (10b) du caisson (10), ladite tige (14) étant mobile en translation par rapport au caisson (10) le long de l'axe longitudinal (X),
et dans lequel, dans la position de repos, le détecteur d'obstacle (2) s'étend dans une zone adjacente à la deuxième extrémité (10b) du caisson (10).

3. Aéronef (5) selon l'une des revendications 1 ou 2, dans lequel le bras (3) comprend une première extrémité (30a), montée sur la structure (6), et une deuxième extrémité (30b), opposée à la première extrémité (30a), le détecteur d'obstacle (2) étant fixé dans une zone adjacente de la deuxième extrémité (30b) du bras (3).

4. Aéronef (5) selon l'une des revendications 1 à 3, dans lequel le détecteur d'obstacle (2) est fixé de manière à être orienté vers une zone arrière de l'atterrisseur (1).

5. Aéronef (5) selon l'une des revendications 1 à 4, dans lequel le bras (3) passe de la position de repos à la position de détection uniquement lorsque l'atterrisseur (1) est en configuration sortie.

6. Aéronef (5) selon l'une des revendications 1 à 5, dans lequel le bras (3) passe en position de repos lorsqu'une vitesse de déplacement de l'aéronef (5) est inférieure à une vitesse seuil prédéterminée.

7. Aéronef (5) selon l'une des revendications 1 à 6, dans lequel le bras (3) est télescopique.

8. Aéronef (5) selon l'une des revendications 1 à 7, comprenant au moins deux détecteurs d'obstacle (2).

9. Aéronef (5) selon la revendication 8, dans lequel les détecteurs d'obstacle (2) sont fixés ensemble de manière à former une pièce monobloc.

10. Aéronef (5) selon l'une des revendications 1 à 11, dans lequel le détecteur d'obstacle (2) comprend au moins un, de préférence au moins deux détecteurs d'obstacle (2) choisis parmi le groupe suivant : détecteur de proximité infrarouge, détecteur de proximité hyperfréquence, détecteur de proximité ultrasons, une ou plusieurs caméras infrarouge ou visible, un télémètre à ultrasons, un télémètre radar ou un télémètre laser.

11. Aéronef (5) selon l'une des revendications 1 à 10, comprenant en outre un actionneur (4) configuré pour mettre en rotation le détecteur d'obstacle (2) autour du bras (3).

12. Aéronef (5) selon la revendication 11, dans lequel l'actionneur est configuré pour mettre en rotation le détecteur d'obstacle (2) autour du bras (3) par mise en rotation du bras (3).

13. Aéronef (5) selon l'une des revendications 1 à 12, dans lequel le détecteur d'obstacle (2) comprend un champ de détection (F) présentant une ouverture et une profondeur configurées pour couvrir une zone inférieure de l'aéronef (5) et une zone arrière de l'aéronef (5).

14. Aéronef (5) selon la revendication 13, dans lequel l'ouverture du champ de détection (F) présente un angle (α) de surveillance horizontale compris entre 0° et 270°, et une profondeur comprise entre environ 0 mètres et environ 250 mètres.

15. Aéronef (5) selon l'une des revendications 1 à 14, comprenant au moins deux détecteurs d'obstacle (2), chaque détecteur d'obstacle (2) étant fixé sur un bras (3) respectif monté sur la structure (6) de manière à être mobile entre une position de repos et une position de détection.

## Patentansprüche

1. Flugzeug (5), umfassend:
- eine Struktur (6),
- ein Fahrwerk (1), das auf der Struktur (6) des Flugzeugs angebracht ist, und
- mindestens einen Hindernisdetektor (2),
wobei der Hindernisdetektor (2) auf einem Arm (3) befestigt ist, wobei der Arm (3) derart auf der Struktur (6) angebracht ist, dass er zwischen einer Ruhestellung, in welcher der Arm (3) eingeklappt ist, und einer Detektionsstellung, in welcher der Arm (3) ausgefahren ist, beweglich ist,
**dadurch gekennzeichnet, dass** das Fahrwerk (1) einfahrbar ist und eine eingefahrene Konfiguration aufweist, in welcher das Fahrwerk (1) in einem Fach (7) untergebracht ist, das in der Struktur (6) gebildet ist, und eine ausgefahrenen Konfiguration, in welcher das Fahrwerk (1) ausgefahren ist, wobei der Arm (3) in dem Fach (7) des Fahrwerks (1) angebracht ist, wobei sich der Hindernisdetektor (2) in der Nähe eines unteren Teils des Fahrwerks (1) von der Struktur (6) des Flugzeugs (5) beabstandet befindet, wenn der Arm ausgefahren ist.

2. Flugzeug (5) nach Anspruch 1, wobei das Fahrwerk (1) umfasst:
- einen Kasten (10), aufweisend eine Hauptrichtung, die sich gemäß einer Längsachse (X) erstreckt, wobei der Kasten (10) ein erstes Ende (10a), das konfiguriert ist, um auf dem Flugzeug (5) angebracht zu sein, und ein zweites Ende (10b) gegenüber dem ersten Ende (10a) umfasst,
- eine Stange (14), die gleitend auf dem zweiten Ende (10b) des Kastens (10) angebracht ist, wobei die Stange (14) in Bezug auf den Kasten (10) entlang der Längsachse (X) translatorisch beweglich ist,
und wobei, in der Ruhestellung, sich der Hindernisdetektor (2) in der dem zweiten Ende (10b) des Kastens (10) benachbarten Zone erstreckt.

3. Flugzeug (5) nach einem der Ansprüche 1 oder 2, wobei der Arm (3) ein erstes, auf der Struktur (6) angebrachtes Ende (30a) und ein zweites, dem ersten Ende (30a) gegenüberliegendes Ende (30b) umfasst, wobei der Hindernisdetektor (2) in einer dem zweiten Ende (30b) des Arms (3) benachbarten Zone befestigt ist.

4. Flugzeug (5) nach einem der Ansprüche 1 bis 3, wobei der Hindernisdetektor (2) derart befestigt ist, dass er in Richtung einer hinteren Zone des Fahrwerks (1) ausgerichtet ist.

5. Flugzeug (5) nach einem der Ansprüche 1 bis 4, wobei der Arm (3) aus der Ruhestellung in die Detektionsstellung nur dann wechselt, wenn das Fahrwerk (1) in ausgefahrener Konfiguration ist.

6. Flugzeug (5) nach einem der Ansprüche 1 bis 5, wobei der Arm (3) in Ruhestellung wechselt, wenn eine Verlagerungsgeschwindigkeit des Flugzeugs (5) niedriger als eine vorher festgelegte Grenzgeschwindigkeit ist.

7. Flugzeug (5) nach einem der Ansprüche 1 bis 6, wobei der Arm (3) teleskopisch ist.

8. Flugzeug (5) nach einem der Ansprüche 1 bis 7, umfassend mindestens zwei Hindernisdetektoren (2).

9. Flugzeug (5) nach Anspruch 8, wobei die Hindernisdetektoren (2) gemeinsam derart befestigt sind, dass sie ein Einblockteil bilden.

10. Flugzeug (5) nach einem der Ansprüche 1 bis 11, wobei der Hindernisdetektor (2) mindestens einen, vorzugsweise mindestens zwei Hindernisdetektoren (2) umfasst, die aus der folgenden Gruppe ausgewählt sind: Infrarot-Näherungsdetektor, Hyperfrequenz-Näherungsdetektor, Ultraschall-Näherungsdetektor, eine oder mehrere Infrarot- oder Sichtbarlichtkameras, ein Ultraschall-Telemeter, ein Radar-Telemeter oder ein Laser-Telemeter.

11. Flugzeug (5) nach einem der Ansprüche 1 bis 10, umfassend ferner einen Aktuator (4), der konfiguriert ist, um den Hindernisdetektor (2) um den Arm (3) in Rotation zu versetzen.

12. Flugzeug (5) nach Anspruch 11, wobei der Aktuator konfiguriert ist, um den Hindernisdetektor (2) um den Arm (3) durch Inrotationversetzen des Arms (3) in Rotation zu versetzen.

13. Flugzeug (5) nach einem der Ansprüche 1 bis 12, wobei der Hindernisdetektor (2) ein Detektionsfeld (F) umfasst, das einen horizontalen Überwachungswinkel aufweist, eine Öffnung und eine Tiefe aufweisend, die konfiguriert sind, um eine untere Zone des Flugzeugs (5) und eine hintere Zone des Flugzeugs (5) abzudecken.

14. Flugzeug (5) nach Anspruch 13, wobei die Öffnung des Detektionsfelds (F) einen horizontalen Überwachungswinkel (a) aufweist, der zwischen 0° und 270° liegt, und eine Tiefe, die zwischen zirka 0 Metern und zirka 250 Metern liegt.

15. Flugzeug (5) nach einem der Ansprüche 1 bis 14, umfassend mindestens zwei Hindernisdetektoren (2), wobei jeder Hindernisdetektor (2) auf einem jeweiligen Arm (3) befestigt ist, der derart auf der Struktur (6) befestigt ist, dass er zwischen einer Ruhestellung und einer Detektionsstellung beweglich ist.

## Claims

1. An aircraft (5) comprising:
- a structure (6),
- a landing gear (1), mounted on the structure (6) of the aircraft, and
- at least one obstacle detector (2),
wherein the obstacle detector (2) is attached to an arm (3), said arm (3) being mounted on the structure (6) so as to be movable between a rest position, in which the arm (3) is collapsed, and a detection position, in which the arm (3) is deployed,
**characterized in that** the landing gear (1) is retractable and has a retracted configuration, in which the landing gear (1) is accommodated in a box (7) formed in the structure (6), and an extended configuration, in which the landing gear (1) is deployed, the arm (3) being mounted in the box (7) of the landing gear (1), the obstacle detector (2) being located in proximity to a lower portion of the landing gear (1) distant from the structure (6) of the aircraft (5), when the arm is deployed.

2. The aircraft (5) according to claim 1, wherein the landing gear (1) comprises:
- a casing (10), having a main direction extending along a longitudinal axis (X), said casing (10) comprising a first end (10a) configured to be mounted on the aircraft (5) and a second end (10b) opposite to the first end (10a),
- a rod (14), slidably mounted on the second end (10b) of the casing (10), said rod (14) being movable in translation with respect to the casing (10) along the longitudinal axis (X),
and wherein, in the rest position, the obstacle detector (2) extends in an area adjacent to the second end (10b) of the casing (10).

3. The aircraft (5) according to any of claims 1 or 2, wherein the arm (3) comprises a first end (30a), mounted on the structure (6), and a second end (30b), opposite to the first end (30a), the obstacle detector (2) being attached in an area adjacent to the second end (30b) of the arm (3).

4. The aircraft (5) according to any of claims 1 to 3, wherein the obstacle detector (2) is attached so as to be oriented toward a rear area of the landing gear (1).

5. The aircraft (5) according to any of claims 1 to 4, wherein the arm (3) passes from the rest position to the detection position only when the landing gear (1) is in the extended configuration.

6. The aircraft (5) according to any of claims 1 to 5, wherein the arm (3) passes into the rest position when a movement speed of the aircraft (5) is less than a predetermined threshold speed.

7. The aircraft (5) according to any of claims 1 to 6, wherein the arm (3) is telescoping.

8. The aircraft (5) according to any of claims 1 to 7, comprising at least two obstacle detectors (2).

9. The aircraft (5) according to claim 8, wherein the obstacle detectors (2) are attached together so as to form a single part.

10. The aircraft (5) according to any of claims 1 to 11, wherein the obstacle detector (2) comprises at least one, preferably at least two obstacle detectors (2) selected from the following group: infrared proximity detector, microwave proximity detector, ultrasonic proximity detector, one or more infrared or visible camera(s), an ultrasonic range finder, a radar range finder or a laser range finder.

11. The aircraft (5) according to any of claims 1 to 10, further comprising an actuator (4) configured to rotate the obstacle detector (2) around the arm (3).

12. The aircraft (5) according to claim 11, wherein the actuator is configured to rotate the obstacle detector (2) around the arm (3) by rotating the arm (3).

13. The aircraft (5) according to any of claims 1 to 12, wherein the obstacle detector (2) comprises a detection field (F) having an aperture and a depth configured to cover a lower area of the aircraft (5) and a rear area of the aircraft (5).

14. The aircraft (5) according to claim 13, wherein the aperture of the detection field (F) has a horizontal viewing angle (a) comprised between 0° and 270°, and a depth comprised between approximately 0 meter and approximately 250 meters.

15. The aircraft (5) according to claim 1 to 14, comprising at least two obstacle detectors (2), each obstacle detector (2) being attached to a respective arm (3) mounted on the structure (6) so as to be movable between a rest position and a detection position.
